# DEMANDE DE BREVET EUROPEEN

(11) **EP 1 985 872 A2**
(43) Date de publication de la demande: **29.10.2008**
(21) Numéro de dépôt: 07380250.6
(22) Date de dépôt: 14.09.2007
(51) Int. Cl.: F16B 12/32, F16B 12/40

(54) **Bride/collier perfectionnée pour l'assemblage de structures de meubles**

(30) Priorité: 24.04.2007 ES 200700850 U
(71) Demandeur: Ziur I, S.L., 20720 Azkoitia (Guipuzcoa) (ES)
(72) Inventeur: Astigarraga Jarne, Josu, 20720 Azkoitia (Gipuzkoa) (ES)
(74) Mandataire: Urizar Barandiaran, Miguel Angel

(57) **Abrégé**

Bride/collier perfectionnée pour l'assemblage de structures de meubles, qui se compose de deux pièces de base (1a), (1 b) pouvant être placées face à face de façon conjuguée et dotées de moyens pour leur ancrage et leur autopositionnement mutuel, en embrassant dans leur union, au moins, deux éléments (e₁), (e₂) de la structure d'un meuble ; et de jeux de formations conjuguées sur ces pièces de base (1a), (1b) et sur ces éléments (e₁), (e₂), qui assurent une fixation rigide amovible entre eux, sous l'action des moyens d'ancrage et d'auto-positionnement mentionnés.

## Description

L'objet de l'invention est une bride/collier perfectionnée pour l'assemblage de structures de meubles.

Dans l'état actuel de la technique, on connaît déjà différents meubles, modulaires ou pas, dont le châssis ou l'armature est formé par des montants, des traverses et/ou des pieds assemblés angulairement (orthogonalement) entre eux. L'assemblage de ces différents éléments de la structure du meuble a lieu en employant des brides ou des colliers du type qui est décrit, par exemple, dans les Brevets US4621879, US4702638, DE29809994 et EP1120062 (ce dernier du demandeur lui-même).

Un problème non résolu de façon efficace dans les solutions connues est la rigidité et la polyvalence de l'assemblage: un assemblage très rigide et polyvalent présentant une structuration simple et aisément maniable est requis pour obtenir des montages/démontages rapides, lorsque l'occasion l'exige et, simultanément, offrant de vastes possibilités, combinaisons et/ou formes concrètes d'assemblage entre eux des éléments qui font partie de la structure du meuble.

La bride/collier de l'invention permet d'atteindre les fins proposées, en se structurant en deux pièces de base pouvant se faire face de façon conjuguée en guise de couvercles à l'opposite et dotés de :
a) moyens pour leur ancrage et autopositionnement mutuel en embrassant dans leur union deux éléments, au moins, de la structure d'un meuble ;
b) jeux de formations conjuguées sur ces pièces de base et sur les éléments de la structure du meuble qui assurent une fixation rigide, amovible entre eux, sous l'action desdits moyens d'ancrage et d'auto-positionnement.

Les pièces de base peuvent présenter une configuration simple ou double.

Pour une configuration simple, chacune des pièces de base comporte, respectivement, deux protubérances ayant des orifices filetés et deux orifices passants à l'opposite, dans lesquels sont insérées deux vis, définissant dans leur union :
a) un jeu de mortaises dans un milieu extrême, où vient buter, à fond, un élément de la structure du meuble qui, à cet effet, comporte à l'opposite un orifice pour y loger la vis d'ancrage correspondante ;
b) deux jeux de sièges dans le milieu opposé, sièges dans lesquels s'ajustent les deux éléments de la structure du meuble, en contact, à fond, entre eux, l'un d'entre eux comportant un orifice passant à l'opposite, pour y loger la vis d'ancrage correspondante ;
   de telle sorte qu'elle admet, au maximum, un élément de la structure du meuble en contact, à fond, avec la bride, et deux éléments de la structure du meuble en contact, à fond, entre eux et disposés orthogonalement par rapport au premier élément cité.

Pour une configuration double, chacune des pièces de base comporte, respectivement, trois protubérances ayant des orifices filetés et trois orifices passants à l'opposite, dans lesquels viennent s'insérer trois vis ; définissant dans leur union :
a) deux jeux de mortaises dans deux milieux extrêmes opposés, où viennent buter, à fond, deux éléments de la structure du meuble qui, à cet effet, comportent un orifice à l'opposite, pour y loger la vis d'ancrage correspondante ;
b) deux jeux de sièges opposés dans le milieu central, sièges dans lesquels s'ajustent les deux éléments de la structure du meuble, en contact à fond entre eux, l'un d'entre eux comportant un orifice passant à l'opposite, pour y loger la vis d'ancrage correspondante ;
   de telle sorte qu'elle admet, au maximum, deux éléments de la structure du meuble en contact, à fond, sur la bride, et deux éléments de la structure du meuble faisant contact, à fond, entre eux et disposés orthogonalement par rapport aux premiers éléments cités.

On utilisera exclusivement des pièces de base à configuration simple, exclusivement des pièces de base a configuration double ou, indifféremment, des pièces de base ayant les deux configurations, en fonction des différents éléments employés pour obtenir la structure du meuble ou en fonction des assemblages à avoir dans chaque cas.

Dans tous les cas, les moyens d'ancrage et d'autopositionnement entre les pièces de base sont :
a) des jeux de protubérances munies d'orifices filetés sur l'une des pièces de base ;
b) des jeux d'orifices passants à l'opposite de ces orifices filetés sur l'autre pièce de base ;
c) des jeux de vis qui, en traversant ces orifices passants et en s'insérant dans ces orifices filetés, rapprochent les pièces de base entre elles, en comprimant entre elles, lors de ce rapprochement, les éléments de la structure du meuble, autopositionnés au préalable dans les jeux correspondants de formations des pièces de base.

Additionnellement, au moins l'une des pièces de base est pourvue de formations complémentaires, notamment un ou plusieurs orifices passants, pour contribuer à la fixation d'autres éléments du meuble.

C'est pour cela que la bride/collier perfectionnée pour l'assemblage de structures de meubles constitue une invention nouvelle impliquant une activité inventive et étant susceptible d'une application au niveau industriel.

Pour mieux comprendre l'objet de la présente invention, on représente sur les plans une forme préférentielle de réalisation pratique, susceptible de changements accessoires qui n'en dénaturent pas le fondement.

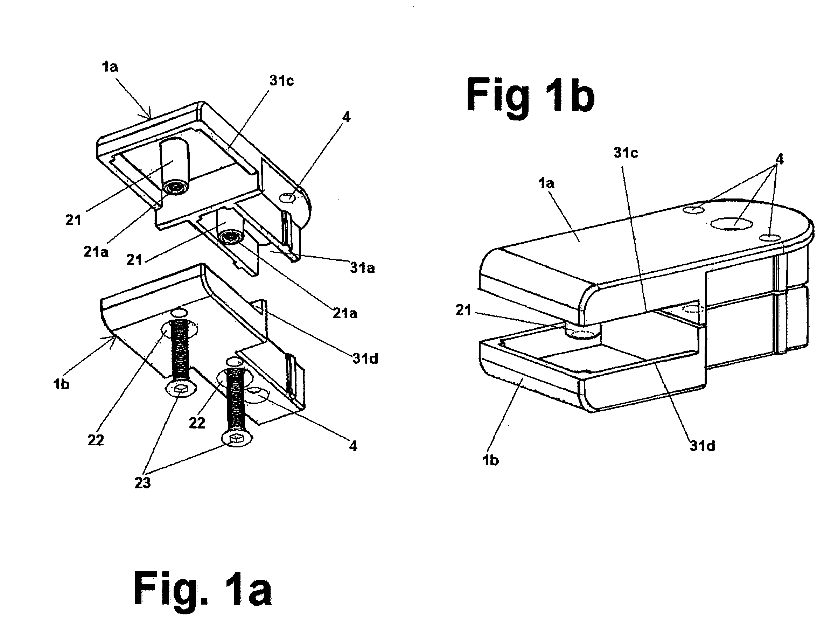

La figure 1 représente une vue générale en perspective d'une bride/collier perfectionnée pour l'assemblage de structures de meubles selon l'objet de l'invention, avec ses composants disposés pour le montage -figure 1 a- et en position montée, sans les vis (23) - figure 1b-, pour un exemple de réalisation pratique où les pièces de base (1 a), (1 b) présentent une configuration simple.

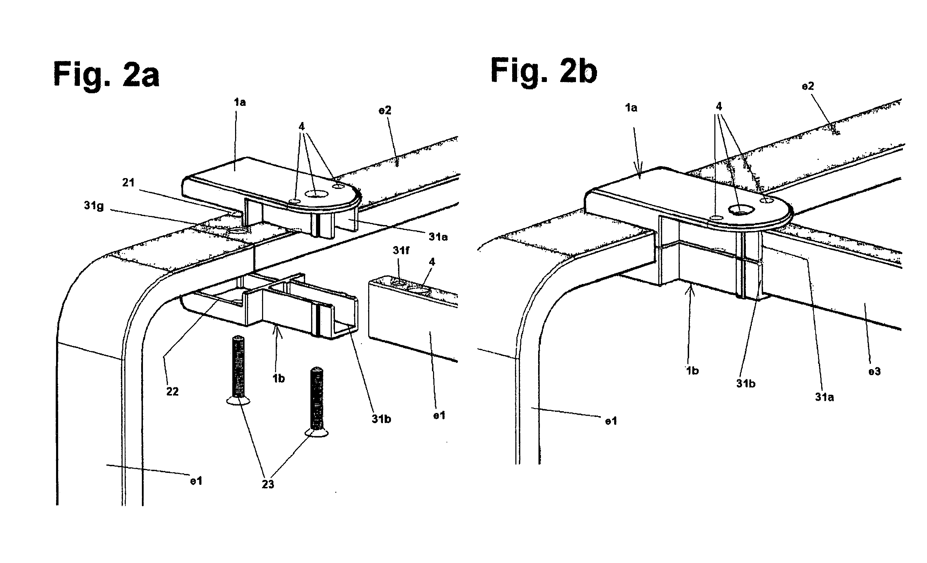

Les figures 2a et 2b représentent deux vues similaires, respectivement, aux figures 1a et 1b antérieures, avec les éléments (e₁), (e₂), qui font partie de la structure d'un meuble disposé pour le montage -figure 2a- et monté -figure 2b-, pour une réalisation dans laquelle les pièces de base (1a), (1b) présentent une configuration simple.

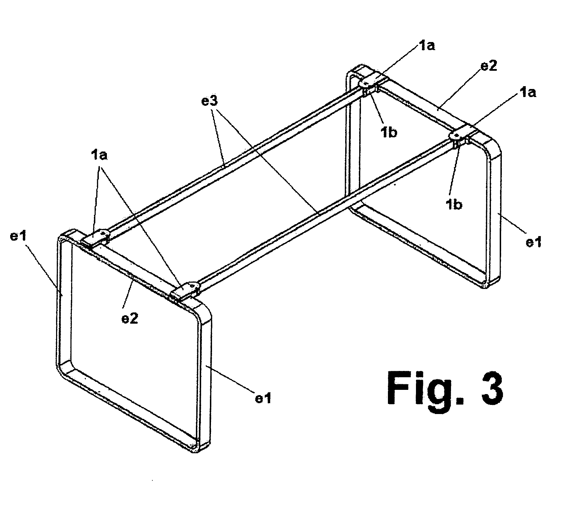

La figure 3 représente une vue générale en perspective de l'exemple de réalisation représenté sur les figures 1 et 2 antérieures, appliqué à la structure d'un meuble qui est, par exemple, une table où les éléments (e₁) sont les pieds, les éléments (e₂) sont les traverses et les éléments (e₃) sont les montants.

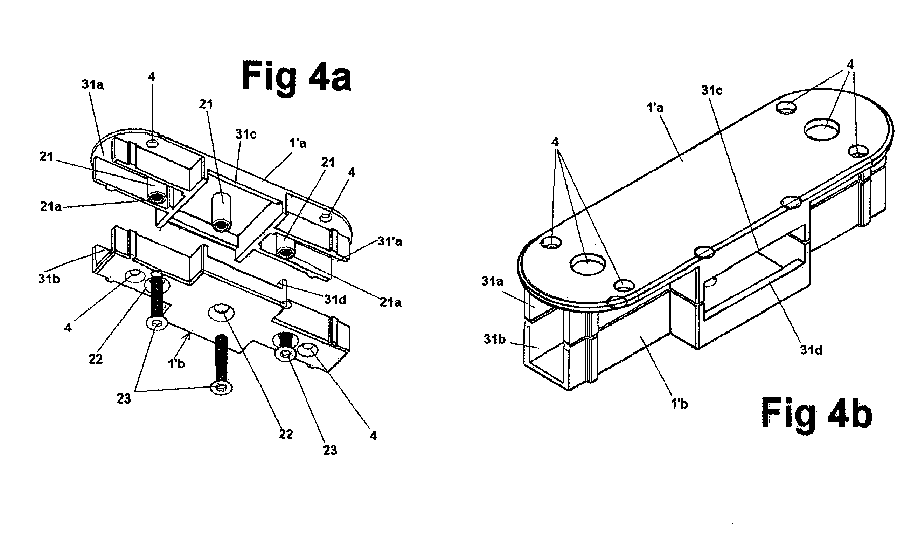

La figure 4 représente une vue générale en perspective d'une bride/collier perfectionnée pour l'assemblage de structures de meubles, selon l'objet de l'invention, avec ses composants disposés pour le montage -figure 4a- et en position montée, sans les vis (23) - figure 4b-, pour un exemple de réalisation pratique où les pièces de base (1'a), (1'b) présentent une configuration double.

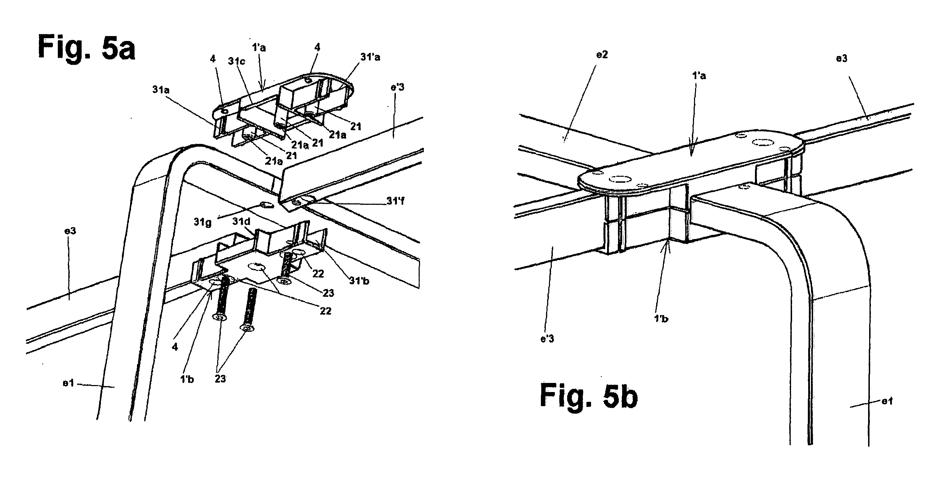

Les figures 5a et 5b représentent deux vues similaires, respectivement, aux figures 4a et 4b antérieures, avec les éléments (e₁), (e₂), (e₃) (e'₃), qui font partie de la structure d'un meuble disposé pour le montage -figure 5a- et monté -figure 5b- pour une réalisation dans laquelle les pièces de base (1'a), (1'b) présentent une configuration double.

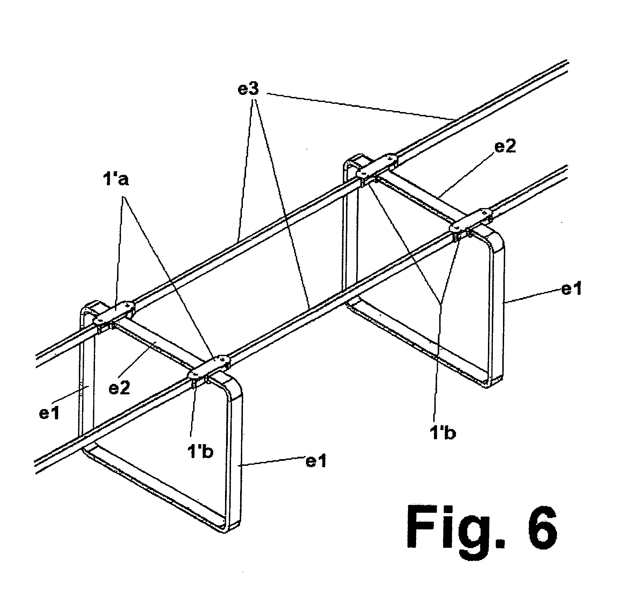

La figure 6 représente une vue générale en perspective de l'exemple de réalisation représenté sur les figures 4 et 5 antérieures, appliqué à une structure multiple d'un meuble.

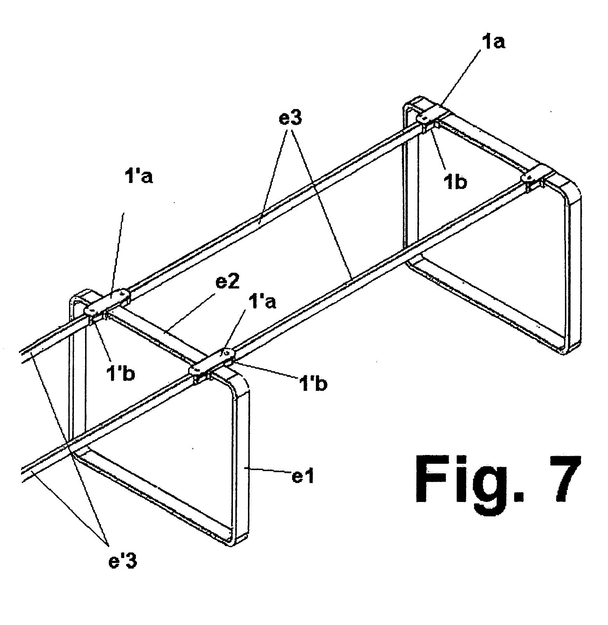

La figure 7 représente une vue générale en perspective, similaire aux figures 3 et 6 antérieures, pour une structure de meuble qui comprend des pièces de base avec des réalisation pratiques simples (1a), (1b) et doubles (1'a), (1'b) de la bride/collier qui fait l'objet de l'invention.

On décrit ci-dessous un exemple de réalisation pratique, non limitative, de la présente invention.

Conformément à l'invention, la bride/collier perfectionnée pour l'assemblage de structure de meuble se compose de deux pièces de base, pouvant être placées face à face de façon conjuguée, en guise de couvercles à l'opposite et munies de moyens pour leur ancrage et leur positionnement mutuel, où elles embrassent entre elles un ou plusieurs éléments (e₁), (e₂), (e₃) qui font partie de la structure d'un meuble, c'est pourquoi elle sont dotées de jeux de formations conjuguées, aussi bien sur ces pièces de base que sur ces éléments (e₁), (e₂), (e₃) de la structure du meuble, de façon à assurer une fixation rigide amovible entre eux, sous l'action des moyens d'ancrage et de positionnement mutuel mentionnés ci-dessus.

La réalisation représentée sur les figures 1 à 3 montre une bride/collier selon l'invention, pour une réalisation dans laquelle les pièces de base (1a), (1 b) présentent une configuration simple qui admet, au maximum, un élément (e₃) de la structure du meuble faisant contact à fond, et deux éléments (e₁), (e₂) de la structure du meuble en contact à fond entre eux et disposés orthogonalement par rapport à l'élément (e₃) mentionné ci-dessus -voir figure 3-.

Selon cette réalisation représentée, pour configurer ces moyens d'ancrage et d'auto-positionnement entre les pièces de base (1a), (1b), l'une de ces pièces de base (1a) comporte deux jeux de protubérances (21) pourvues d'orifices filetés (21a) et l'autre pièce de base (1 b) comporte deux jeux d'orifices passants (22) ayant une position à l'opposite de ceux-là, orifices (21 a), (22) dans lesquels on dispose deux jeux de vis (23) qui, en traversant ces orifices (22) et s'insérant dans ces orifices (21 a), rapprochent les pièces de base (1a), (1b) entre elles, en y comprimant, lors de ce rapprochement, les éléments de la structure du meuble.

Selon cette réalisation représentée, ces formations pour une fixation amovible des éléments de la structure du meuble sont :
- d'une part, des jeux de mortaises (31a), (31 b) dans un milieu extrême des pièces de base (1a), (1b), milieu extrême où vient buter, à fond, l'extrémité correspondante de l'élement (e₁) de la structure du meuble qui, à cet effet, comporte un orifice (31f) à l'opposite, pour y loger la vis d'ancrage (23) ;
- d'autre part, des jeux de sièges (31 c), (31 d) dans le milieu opposé des pièces de base (1a), (1 b), sièges (31c), (31 d) où s'ajuste l'élément correspondant (e₁), (e₂) de la structure du meuble, l'un d'entre eux (e₂) comportant, à cet effet, un orifice passant (31g) à l'opposite de ceux-là, pour y loger les moyens d'ancrage (2).

Comme on l'observe sur la figure 2a, les éléments (e₁), (e₂) de la structure du meuble sont en contact entre eux, à fond, aussi suffit-il de pratiquer un orifice (31 g) dans l'un d'entre eux. Le fait de le pratiquer dans l'un ou dans l'autre est indifférent et accessoire aux fins de l'invention.

La réalisation représentée sur les figures 4 à 6 montre une bride/collier, selon l'invention, pour une réalisation dans laquelle les pièces de base (1'a), (1'b) présentent une configuration double, qui admet, au maximum (à la différence de l'exemple de réalisation antérieur), deux éléments (e₃), (e'₃) de la structure du meuble faisant contact, à fond, et ayant une disposition symétrique, et (de même que dans l'exemple de réalisation antérieur), deux éléments (e₁), (e₂) de la structure du meuble en contact entre eux, à fond, et disposés orthogonalement par rapport aux éléments (e₃), (e'₃) cités ci-dessus - voir figure 6-.

Selon cette réalisation représentée, pour configurer ces moyens d'ancrage et d'auto-positionnement entre les pièces base (1'a), (1'b), l'une de ces pièces de base (1a) comporte trois jeux de protubérances (21) munies d'orifices filetés (21 a) et l'autre pièce de base (1 b) comporte trois jeux d'orifices passants (22) ayant une position à l'opposite de ceux-là, orifices (21 a), (22) dans lesquels sont disposés trois jeux de vis (23) qui, en traversant ces orifices (22) et en s'insérant dans ces orifices (21 a), rapprochent les pièces de base (1'a), (1'b) entre elles, en comprimant entre elles, lors de ce rapprochement, les éléments de la structure du meuble.

Selon cette réalisation représentée, les formations pour la fixation amovible des éléments (e₃), (e'₃) de la structure du meuble sont :
a) des jeux de mortaises (31 a), (31 b); (31'a), (31'b) dans les deux milieux extrêmes opposés des pièces de base (1a), (1 b), milieux opposés où viennent buter, à fond, les extrémités des éléments (e₃), (e'₃) de la structure du meuble qui, à cet effet, comportent, pour chacun d'entre eux un orifice (31f), (31'f), à l'opposite de ceux-là, pour y loger la vis d'ancrage (23) correspondante ;
b) des jeux de sièges (31 c), (31 d) sur les deux côtés opposés des pièces de base (1'a), (1'b), sièges (31c), (31d) où s'ajuste l''élément correspondant (e₁), (e₂) de la structure du meuble, l'un de ces éléments (e₂) comportant à cet effet un orifice passant (31 g) à l'opposite de ceux-là, pour y loger les moyens d'ancrage (2).

Comme on l'observe sur la figure 5a, les éléments (e₁), (e₂) de la structure du meuble font contact entre eux, à fond, aussi suffit-il de pratiquer l'orifice (31g) dans l'un d'entre eux. Le fait de le pratiquer dans l'un ou l'autre est indifférent et accessoire aux fins de l'invention.

On peut utiliser exclusivement des pièces de base (1a), (1 b) ayant une structure simple -comme sur la figure 3-, exclusivement des pièces de base (1'a), (1'b) ayant une structure double -comme sur la figure 6- ou une combinaison des deux -comme sur la figure 7- sans altérer pour cela l'essence de l'invention.

Dans n'importe laquelle des réalisation décrites et représentées, l'une des pièces de base (1 b), (1'b) est munie, additionnelement, d'un ou plusieurs orifices passants (4) ou, en général, d'une ou de plusieurs formations complémentaires, qui contribuent à la fixation des éléments restants du meuble (comme, par exemple, le panneau d'une table).

Ces formations complémentaires peuvent varier et, de fait, varient, aussi bien en quantité qu'en taille et/ou disposition, en fonction des caractéristiques ou des besoins de l'ancrage lui-même (ou de l'élément correspondant à fixer).

## Revendications

1. Bride/collier perfectionnée pour l'assemblage de structures de meubles, **se caractérisant par le fait qu'**elle se compose de deux pièces de base (1 a), (1 b), pouvant être placées face à face de façon conjuguée, en guise de couvercles à l'opposite et munies de :
a) moyens pour leur ancrage et auto-positionnement mutuel embrassant dans leur union, au moins, deux éléments de la structure d'un meuble ;
b) jeux de formations conjuguées dans ces pièces de base (1 a), (1 b) et dans ces éléments de la structure du meuble, qui assurent une fixation amovible rigide entre eux, sous l'action desdits moyens d'ancrage et d'auto-positionnement.

2. Bride/collier perfectionnée pour l'assemblage de structures de meubles, selon la revendication antérieure, **se caractérisant par le fait que** ces pièces de base (1a), (1 b) présentent une configuration simple, chacune d'entre elles comportant, respectivement, deux protubérances (21) avec des orifices filetés (21 a) et deux orifices passants (22) à l'opposite de ceux-là, où s'insèrent deux vis (23), définissant dans leur union :
a) un jeu de mortaises (31 a), (31 b) dans un milieu extrême, où vient buter, à fond, un élément (e₃) de la structure du meuble qui, à cet effet, comporte un orifice (31f) à l'opposite, pour y loger la vis d'ancrage (23) correspondante ;
b) deux jeux de sièges (31 c), (31 d) dans le milieu opposé, où s'ajustent les deux éléments (e₁), (e₂) de la structure du meuble, qui font contact, à fond, entre eux, l'un d'entre eux (e₂) comportant un orifice passant (31 g) à l'opposite, pour y loger la vis d'ancrage (23) correspondante;
de telle sorte qu'elle admet, au maximum, un élément (e₃) de la structure du meuble, en contact, à fond, avec la bride et deux éléments (e₁), (e₂) de la structure du meuble faisant contact, à fond, entre eux et disposés orthogonalement par rapport au premier élément (e3) mentionné.

3. Bride/collier perfectionnée pour l'assemblage de structures de meubles, selon la revendication 1, **se caractérisant par le fait que** ces pièces de base (1'a), (1'b) présentent une configuration double, chacune d'entre elles comportant, respectivement, trois protubérances (21) avec des orifices filetés (21 a) et trois orifices passants (22) face à face où s'insèrent trois vis (23); définissant dans leur union :
a) deux jeux de mortaises (31 a), (31 b); (31'a), (31'b) dans deux milieux extrêmes opposés où viennent buter, à fond, deux éléments (e₃), (e'₃) de la structure du meuble qui, à cet effet, comportent un orifice (31f) (31'f) à l'opposite desdits orifices (21 a), (22), pour y loger la vis d'ancrage (23) correspondante ;
b) deux jeux de sièges (31 c), (31 d) opposés dans le milieu central, sièges dans lesquels s'ajustent les deux éléments (e₁), (e₂) de la structure du meuble, qui font contact entre eux, à fond, l'un d'entre eux (e₂) comportant une orifice passant (31g) à l'opposite desdits orifices (21 a), (22), pour y loger la vis d'ancrage (23) correspondante; de telle sorte qu'elle admet, au maximum, deux éléments (e₃), (e'₃) de la structure du meuble venant buter, à fond, sur la bride et deux éléments (e₁), (e₂) de la structure du meuble en contact, à fond, entre eux et disposés orthogonalement par rapport aux premiers éléments (e₃), (e'₃) mentionnés.

4. Bride/collier perfectionnée pour l'assemblage de structures de meubles, selon les revendications antérieures, **se caractérisant par le fait que** ces moyens d'ancrage et d'autopositionnement entre les pièces de base (1a), (1b); (1'a), (1'b) sont :
a) des jeux de protubérances (21) pourvues d'orifices filetés (21 a) dans l'une des pièces de base (1a) ;
b) des jeux d'orifices passants (22) à l'opposite de ces orifices filetés (21 a) dans l'autre pièce de base (1 b) ;
c) des jeux de vis (23) qui, en traversant ces orifices (22) et en s'insérant dans ces orifices (21 a), rapprochent les pièces de base (1 a), (1 b) entre elles en comprimant entre elles, lors de ce rapprochement, les éléments de la structure du meuble préalablement autopositionnés dans des jeux correspondants de formations (31a), (31b); (31'a), (31'b); (31c), (31d) des pièces de base (1a), (1b); (1'a), (1'b).

5. Bride/collier perfectionnée pour l'assemblage de structures de meubles, selon les revendications antérieures, **se caractérisant par le fait qu'**additionnellement, au moins l'une des pièces de base (1 b), (1'b) est pourvue de formations complémentaires, notamment un ou plusieurs orifices passants (4), pour contribuer à la fixation d'autres éléments du meuble.
